# FASCICULE DE BREVET EUROPEEN

(11) **EP 1 591 330 B1**
(45) Date de publication et mention de la délivrance du brevet: **06.02.2008**
(21) Numéro de dépôt: 05290921.5
(22) Date de dépôt: 27.04.2005
(51) Int. Cl.: B60S 1/38

(54) **Raclette d'essuyage pour balai d'essuie-glace de véhicule automobile**
Wischblatt für Scheibenwischer eines Kraftfahrzeuges
Wiper blade for windscreen wiper of a motor vehicle

(30) Priorité: 27.04.2004 FR 0404452
(43) Date de publication de la demande: 02.11.2005
(73) Titulaire: Peugeot Citroën Automobiles S.A., 78140 Vélizy Villacoublay (FR)
(72) Inventeur: Jeuffe, Gérard, 78810 Feucherolles (FR); Cahen, Thierry, 92150 Suresnes (FR)
(74) Mandataire: Berger, Helmut

(56) Documents cités:
- DE-A- 3 903 305
- DE-A- 10 025 630
- DE-A- 19 745 686
- US-A- 3 636 583
- US-A- 4 123 817
- US-A- 4 524 481

## Description

La présente invention concerne une raclette d'essuyage pour balai d'essuie-glace notamment de véhicule automobile.

Une telle raclette est connue comme comprenant un talon supérieur pouvant être relié à une structure de support appartenant au balai d'essuie-glace et qui est renforcé par une vertèbre longitudinale de rigidification, et une lèvre inférieure d'essuyage d'une surface vitrée, par exemple du pare-brise ou de la lunette arrière du véhicule automobile.

Actuellement, la forme des surfaces vitrées notamment des pares-brise des véhicules automobiles est de plus en plus complexe et difficile à réaliser par les verriers, de sorte que les défauts de planéité de la surface du pare-brise se traduisant par des formes concaves et convexes de cette surface, sont difficiles à éviter.

Les raclettes en matériau élastomère d'essuyage des balais d'essuie-glace actuels comprennent une charnière permettant de relier le talon supérieur à la lèvre d'essuyage pour permettre à cette dernière de se retourner lors d'un changement de sens d'essuyage de la vitre. Ce type de raclette ne permet pas de nettoyer correctement les pares-brise comportant les défauts de planéité susmentionnés de la surface du pare-brise, la raclette n'atteignant pas les formes concaves de la surface du pare-brise lorsque la raclette se situe sur une zone d'essuyage constituée de forme convexe. En présence de formes concaves et convexes de la surface du pare-brise, les formes convexes provoquent une compression différente de la lèvre à certains endroits, entraînant un retournement brutal et bruyant de la lèvre d'essuyage. Ce bruit est d'autant plus important que la longueur de la raclette d'essuyage est grande.

Pour résoudre ce problème de défaut de parallélisme entre la surface du pare-brise et la raclette d'essuyage, une solution consiste à accrocher sur le talon de la raclette un déflecteur aérodynamique permettant d'exercer sur la lèvre d'essuyage une pression d'essuyage augmentant avec la vitesse de déplacement du véhicule. Cependant, la présence du déflecteur aérodynamique à chaque raclette d'essuyage se traduit par une usure prématurée car les contraintes augmentent et des bruits désagréables liés aux turbulences d'air autour de ce déflecteur et, en outre, ce déflecteur ne résout pas le problème de bruit engendré par le retournement brutal de la lèvre d'essuyage sur son talon lors des changements de sens de balayage alterné de l'essuie-glace.

DE 100 25 630 décrit une raclette d'essuyage conforme au préambule de la revendication 1.

Selon cette raclette connue, on prévoit deux corps creux situés de part et d'autre de la lèvre d'essuyage et permettant de véhiculer du fluide destiné à nettoyer la surface vitrée du pare-brise. Rependant, cette raclette connue n'est pas du tout adaptée, à cause de la rigidité en direction perpendiculaire au talon de la partie centrale de cette raclette située dans l'axe de la lèvre d'essuyage, à remédier aux défauts d'essuyage générés par les défauts de planéité des pare-brises.

La présente invention propose une raclette d'essuyage pour balai d'essuie-glace de véhicule automobile permettant de supprimer les défauts de parallélisme entre le talon de la raclette et la surface vitrée à essuyer, de supprimer le bruit occasionné lors du retournement de la lèvre d'essuyage sur son talon et de maintenir un angle d'inclinaison à une valeur déterminée de la lèvre d'essuyage lors du balayage de l'essuie-glace de manière que l'arête d'extrémité correspondante de la lèvre soit en contact avec la surface vitrée pour assurer une bonne qualité d'essuyage.

A cet effet, la raclette d'essuyage pour balai d'essuie-glace de véhicule automobile conforme à l'invention est du type comprenant un talon supérieur pouvant être relié à la structure du balai d'essuie-glace et renforcé par une vertèbre longitudinale de rigidification, et une lèvre inférieure d'essuyage reliée au talon par au moins un moyen de suspension conférant une souplesse à la lèvre inférieure, et est caractérisée en ce que le moyen de suspension comprend un profilé central creux à section transversale sensiblement en forme de secteur élastiquement déformable en direction perpendiculaire au talon, la lèvre d'essuyage est reliée au profilé central par l'intermédiaire d'un pied solidaire de la paroi arquée du profilé qui est relié au talon de manière articulée pour permettre au pied et à la lèvre d'essuyage de s'incliner élastiquement d'un angle limité déterminé de part et d'autre du plan médian longitudinal de la raclette selon le sens de déplacement du balai d'essuie-glace.

Selon un premier mode de réalisation, le profilé central de suspension est relié au talon par une charnière longitudinale d'articulation et le talon comprend deux profilés latéraux à section transversale sensiblement en forme de demi-secteur disposés de part et d'autre du profilé central symétriquement au plan médian longitudinal de la raclette et dont les parois latérales inclinées situées en regard respectivement des parois latérales du profilé central constituent des butées de limitation de l'inclinaison du pied et de la lèvre d'essuyage.

Avantageusement, la face de chaque paroi latérale du profilé central comprend une nervure longitudinale à section sensiblement demi-circulaire située en regard d'une paroi correspondante d'un profilé latéral et venant en appui sur cette paroi du profilé latéral pour définir la position inclinée déterminée du pied et de la lèvre d'essuyage.

Selon un second mode de réalisation, le talon de la raclette d'essuyage comprend deux profilés latéraux à section transversale sensiblement en forme de demi-secteur disposés de part et d'autre du profilé central symétriquement au plan médian longitudinal de la raclette et ayant chacun une paroi latérale inclinée située en regard d'une paroi latérale correspondante du profilé central, et chaque paroi latérale du profilé central est raccordée à la paroi inclinée de plus grande épaisseur du profilé latéral par une partie de liaison arquée pour permettre l'inclinaison déterminée du pied et de la lèvre d'essuyage par déformation élastique contrôlée relativement au talon des parois raccordées entre elles des profilés latéraux et central.

Avantageusement, le talon comprend une paroi rigide longitudinale située dans le plan médian longitudinal de la raclette en s'étendant dans le profilé central et constituant une butée du pied et de la lèvre d'essuyage à l'une ou l'autre de leur position inclinée déterminée.

Selon une variante de réalisation, la paroi rigide s'étend dans le profilé central à une certaine distance de la paroi de fond arquée de ce profilé pour permettre à ce dernier de se déformer perpendiculairement au talon.

Selon une autre variante de réalisation, la paroi rigide s'étend dans le profilé central et a sa partie d'extrémité libre relativement souple logée dans le profilé se terminant par une partie cylindrique creuse à proximité de la paroi de fond arquée du profilé et pouvant se déformer notamment perpendiculairement au talon.

Les deux parties de liaison arquées des parois des profilés latéraux et central sont raccordées au talon par deux bandes longitudinales en V inversé symétriques au plan médian longitudinal de la raclette en position de repos de cette dernière.

Selon ce second mode de réalisation, la face de chaque paroi latérale du profilé central comprend une nervure longitudinale à section sensiblement demi-circulaire située en regard d'une paroi correspondante d'un profilé latéral.

L'inclinaison du pied et de la lèvre d'essuyage de chaque côté du plan médian longitudinal de la raclette est d'environ 15° à environ 20° d'angle.

La raclette d'essuyage est réalisée par extrusion en matériau élastomère.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention et dans lesquels :
- la figure 1 est une vue en perspective d'un essuie-glace pourvu d'une raclette conforme à l'invention permettant d'essuyer la surface d'un pare-brise de véhicule automobile ;
- les figures 2A et 2B sont des vues en coupe transversale d'une raclette d'essuyage selon un premier mode de réalisation de l'invention et la figure 2C est une vue en coupe transversale d'un pare-brise de véhicule à nettoyer par la raclette des figures 2A et 2C ;
- les figures 3A à 3C sont des vues en coupe similaires à celles des figures 2A et 2B et représentant une variante de réalisation de la raclette d'essuyage de l'invention ;
- les figures 4A à 4C sont des vues en coupe transversale d'une raclette d'essuyage selon un second mode de réalisation de l'invention ;
- les figures 5A à 5C sont des vues en coupe transversale d'une variante de réalisation de la raclette d'essuyage des figures 4A à 4C ;
- les figures 6A à 6C sont des vues en coupe transversale représentant une variante de réalisation de la raclette d'essuyage des figures 5A à 5C ;
- les figures 7A à 7C sont des vues en coupe transversale d'une raclette d'essuyage suivant un troisième mode de réalisation de l'invention ; et
- les figures 8A à 8C sont des vues en coupe transversale d'une variante de réalisation de la raclette d'essuyage des figures 7A à 7C.

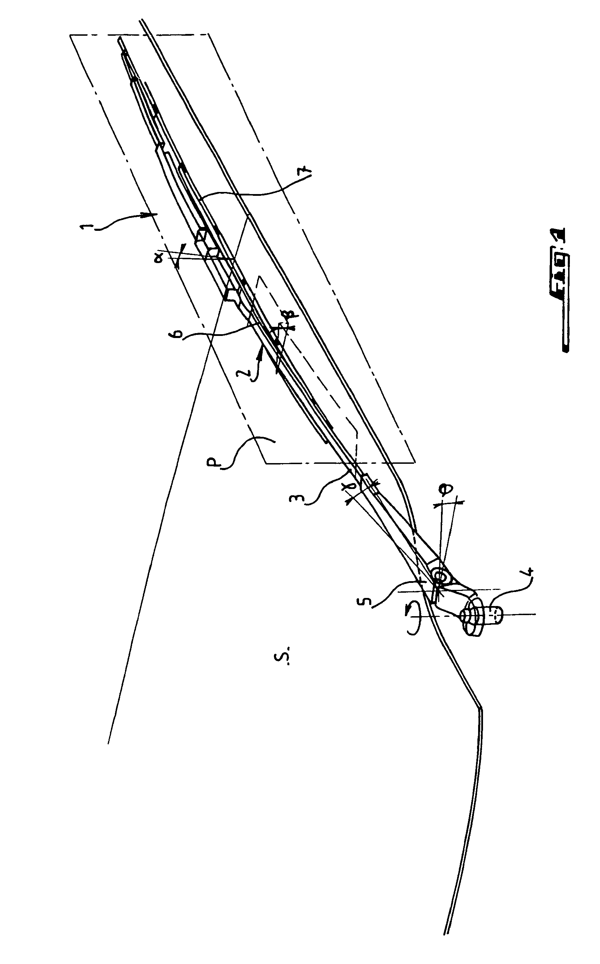

En se reportant à la figure 1, la référence 1 désigne un essuie-glace permettant d'essuyer une surface vitrée S, telle que celle d'un pare-brise de véhicule automobile, étant bien entendu que l'essuie-glace 1 peut également être utilisé pour nettoyer la surface vitrée de la lunette arrière d'un véhicule automobile ou de tout autre véhicule.

L'essuie-glace 1 comprend un balai d'essuie-glace 2 relié à un bras d'essuie-glace 3 qui est monté sur un arbre d'entraînement 4 en balayage alterné par l'intermédiaire d'une tête d'entraînement 5.

Le balai 2 comprend un support 6 portant une raclette d'essuyage 7 réalisée par extrusion en matériau élastomère et qui sera décrite ultérieurement.

Le support 6 s'étend longitudinalement suivant un arc de manière que la raclette d'essuyage 7 épouse le galbe de la vitre S.

L'angle α correspond à l'angle d'attaque de la raclette 7 relativement au pare-brise et qui sera défini ultérieurement. Les angles β, α et θ correspondent respectivement aux angles de vrillage, de site et d'inclinaison de la tête de l'essuie-glace.

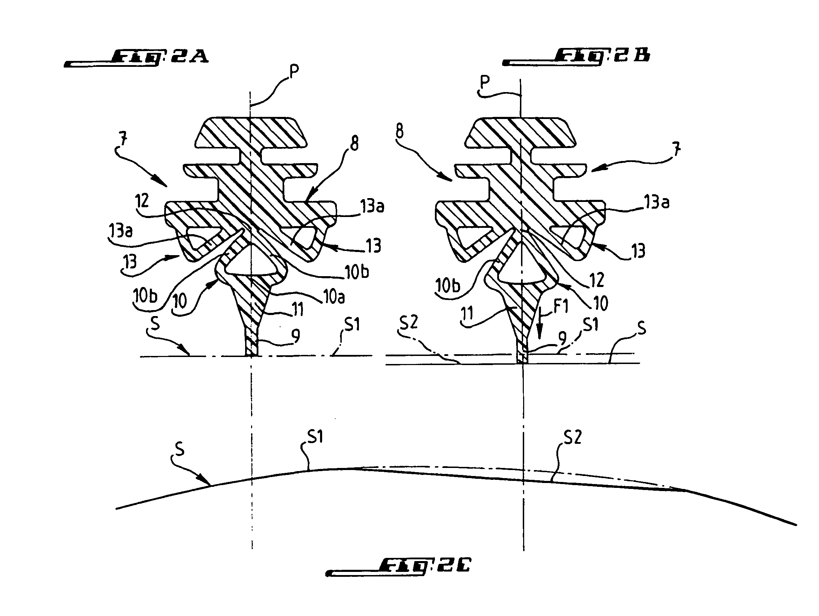

Selon le premier mode de réalisation représenté aux figures 2A et 2B, la raclette d'essuyage 7, qui présente une symétrie de conception par rapport à un plan vertical longitudinal médian P, comprend un talon supérieur 8 destiné à être relié à la structure de support 6 appartenant au balai d'essuie-glace 2, le talon 8 étant renforcé par une vertèbre longitudinale de rigidification non représentée.

La raclette d'essuyage 7 comprend en outre une lèvre inférieure d'essuyage 9 reliée au talon 8 par un moyen de suspension 10 qui est constitué par un profilé central longitudinal creux à section transversale sensiblement en forme de secteur élastiquement déformable en direction perpendiculaire au talon 8, c'est-à-dire en direction parallèle au plan P.

La lèvre inférieure 9 est reliée au profilé central 10 par l'intermédiaire d'un pied 11 solidaire de la paroi arquée 10a du profilé central 10.

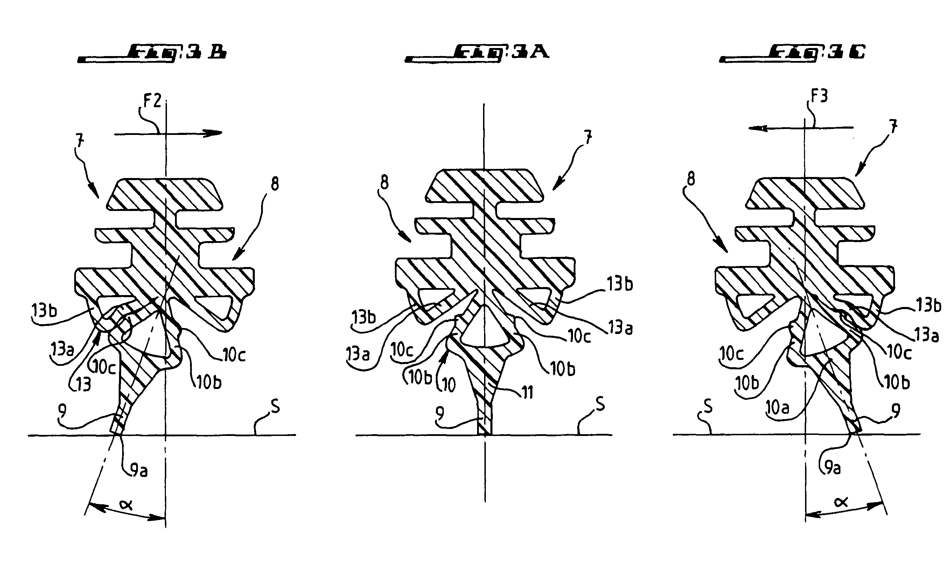

Le profilé central 10 est relié au talon 8 par une charnière longitudinale d'articulation 12 située dans le plan de symétrie P de sorte que le profilé central 10, le pied 11 et la lèvre inférieure 9 sont articulés relativement au talon 8 pour s'incliner dans un sens ou dans l'autre de part et d'autre du plan médian longitudinal P autour de la charnière 12 suivant le sens de balayage alterné de l'essuie-glace 1 comme on le verra en liaison avec les figures 3A à 3C.

La figure 2C montre que la surface S du pare-brise présente un galbe S1 réel ou standard parallèle au talon et une surface plane S2 constituant un défaut par rapport au profilé standard S1 se traduisant par un écart dans le cas présent en profondeur par rapport à la surface standard S1. La figure 2A montre que la lèvre d'essuyage 9 occupe une position déterminée en appui sur la surface standard S et la figure 2B montre qu'en cas de défaut, la lèvre d'essuyage 9 est déplacée élastiquement en appui dans le sens de la flèche F1 dirigée vers la partie de surface plane S2 du pare-brise S du fait de la déformation élastique du profilé central 10 qui, dans le cas présent, s'est étendu dans le sens F1 relativement à sa position de la figure 2A. Ainsi, la déformation élastique du profilé central 10 compense les défauts de parallélisme entre le talon 8 et la surface vitrée S du pare-brise.

Le talon 8 comprend deux profilés latéraux creux 13 à section transversale approximativement en forme de demi-secteur et disposés de part et d'autre du profilé central 10 symétriquement au plan médian longitudinal P de la raclette 7. Les profilés creux latéraux 13 présentent deux parois latérales inclinées 13a et disposées en regard respectivement des deux parois latérales inclinées 10b du profilé central 10. Les parois latérales 13a des deux profilés 13 constituent des butées de limitation de l'angle d'inclinaison du profilé central 10 et, par conséquent, du pied 11 et de la lèvre d'essuyage 9 lors du balayage alterné de l'essuie-glace. Les parois latérales 13a sont raccordées directement au talon 8 de part et d'autre de la charnière d'articulation 12.

Selon la variante de réalisation représentée aux figures 3A à 3C, chaque paroi latérale 10b du profilé central 10 comprend sur sa face externe en regard de la paroi latérale correspondante 13a du profilé latéral 13 une nervure longitudinale 10c à section transversale approximativement semi-circulaire.

Lorsque la raclette d'essuyage 7 se déplace alternativement en sens aller (flèche F2, figure 3B) et en sens retour (flèche F3, figure 3C) relativement à sa position de repos de la figure 3A, l'ensemble constitué par le profilé central 10, le pied 11 et la lèvre d'essuyage 9 de la raclette 7 s'incline d'un angle α limité autour de la charnière d'articulation 12 en sens aller et en sens retour du balayage alterné de l'essuie-glace du fait que l'une ou l'autre des parois latérales 10b du profilé 10 vient en appui sur la paroi correspondante 13a du profilé latéral 13. Dans le cas présent, l'angle α peut être compris entre environ 15° et environ 20°. Ainsi, la charnière d'articulation 12 permet le retournement de la lèvre d'essuyage 9 lors d'un changement de sens de direction de balayage de l'essuie-glace et le blocage de la lèvre d'essuyage 9 à sa position angulaire limitée α dans l'un ou l'autre des deux sens de balayage alterné de l'essuie-glace par appui d'une paroi latérale 10b du profilé central 10 sur la paroi correspondante 13a du profilé latéral 13 permet de supprimer le bruit lors du retournement de la lèvre d'essuyage 9. Selon la variante des figures 3A à 3C, la présence des nervures longitudinales 10c du profilé central 10 permet de réduire davantage ce bruit en venant en contact sur la paroi latérale correspondante 13a du profilé latéral 13 avec, le cas échéant, déformation élastique localisée de la paroi latérale 13a comme représenté aux figures 3A et 3C. En outre, le maintien de la lèvre d'essuyage 9 à son angle d'inclinaison α dans un sens ou dans l'autre du balayage d'essuie-glace permet à chaque arête d'extrémité 9a de la lèvre 9 d'être en contact sur la surface S du pare-brise comme représenté aux figures 3B et 3C de manière à assurer une excellente qualité d'essuyage de cette surface.

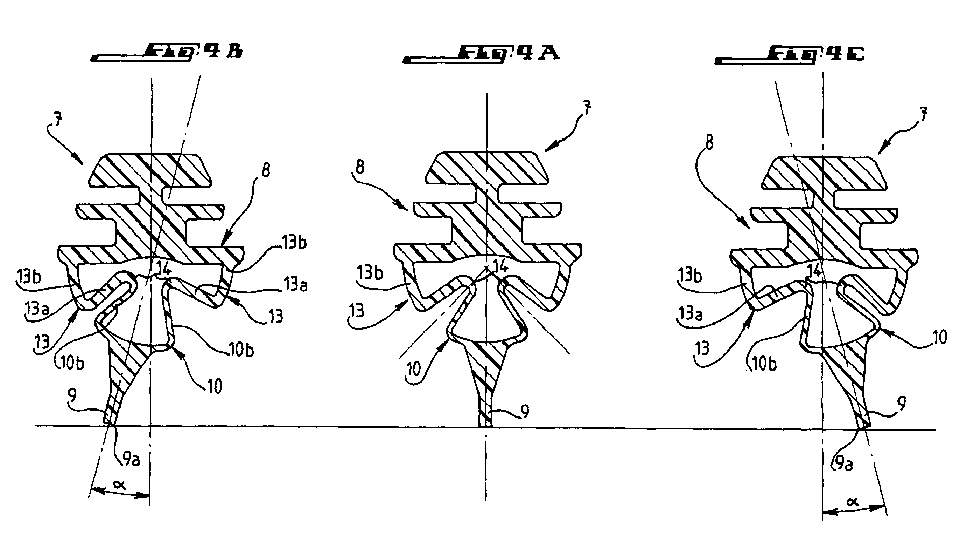

Selon le mode de réalisation représenté aux figures 4A à 4C, les parois latérales 10b du profilé central 10 sont raccordées respectivement aux parois latérales 13a des profilés latéraux 13 par une partie de liaison arquée 14 non raccordée au talon 8, c'est-à-dire que les deux profilés latéraux 13 sont raccordés à ce talon uniquement par leurs parois arquées 13b. En outre, l'épaisseur de chaque paroi latérale 10b du profilé central 10 est plus faible que l'épaisseur de chaque paroi latérale 13a du profilé latéral 13. Ainsi, le profilé central 10 et les profilés latéraux 13 constituent les moyens de suspension de la lèvre d'essuyage 9. Lorsque la raclette d'essuyage 7 est déplacée dans les deux sens de balayage alterné de l'essuie-glace, la déformation élastique relativement au talon 8 des profilés latéraux 13 et central 10 est telle que l'une des parois latérales 10b du profilé central 10 s'écarte élastiquement de la paroi associée 13a du profilé latéral 13 tandis que l'autre paroi 10b du profilé central 10 se rapproche élastiquement de la paroi associée 13a de l'autre profilé latéral 13 comme représenté aux figures 4B et 4C. Ces déformations permettent d'assurer l'inclinaison de la lèvre d'essuyage 9 à une valeur d'angle α limitée et contrôlée par les différences d'épaisseur entre parois latérales 10b et 13a des profilés 10, 13. La maîtrise des déformations de ces profilés est telle que les parois latérales 10b du profilé central 10 ne viennent pas en contact avec les parois latérales 13a des profilés latéraux 13 lors du balayage de l'essuie-glace dans les deux sens. On notera également que la partie de raccordement 14 entre les parois 10b et 13a écartées l'une de l'autre dans le sens du balayage représenté à la figure 4B ou à la figure 4C se trouve pratiquement à la même position de repos représentée en figure 4A tandis que l'autre partie de raccordement 14 s'est quelque peu déplacée vers le talon 8 par rapport à cette position de repos du fait d'une légère déformation de la paroi plus épaisse 13a du profilé latéral correspondant 13. Autrement, la raclette d'essuyage 7 des figures 4A à 4C assure les mêmes fonctions que celle des figures 2A, 2B et 3A à 3C, à savoir éliminer les défauts de parallélisme entre le talon et la surface à essuyer, supprimer le bruit lors du retournement de la raclette d'essuyage 9 et maintenir la lèvre d'essuyage 9 à une valeur angulaire d'inclinaison limitée, par exemple à 15°, lors du balayage de manière que l'arête d'extrémité 9a de la lèvre 9 soit en contact avec le pare-brise pour assurer une bonne qualité d'essuyage.

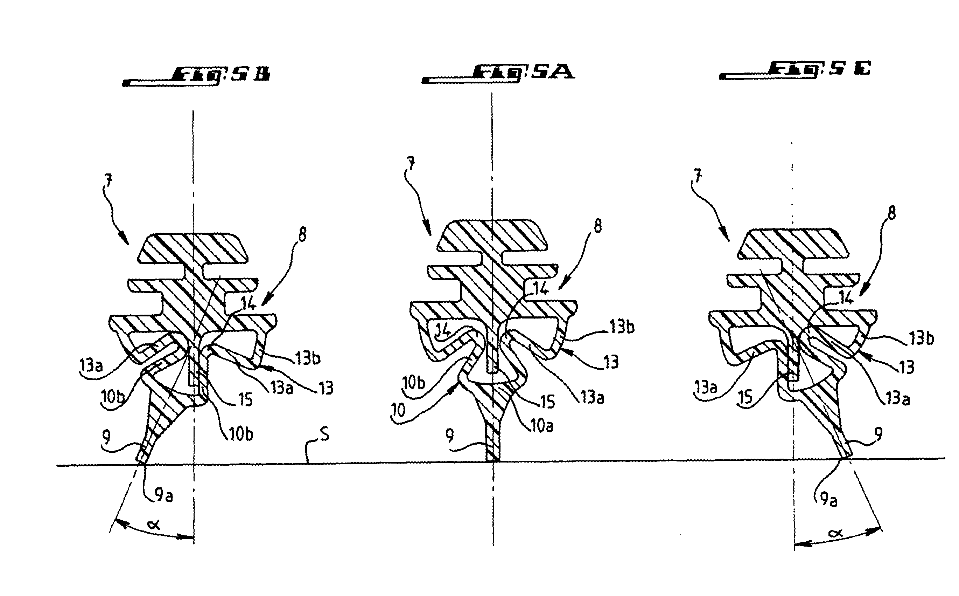

Le mode de réalisation de la raclette d'essuyage 7 représenté aux figures 5A à 5C diffère de celui des figures 4A à 4C en ce qu'il comprend une paroi ou cloison rigide 15 solidaire du talon 8 et s'étendant longitudinalement dans le plan médian longitudinal P de la raclette d'essuyage 7. La paroi 15 s'étend dans la cavité interne du profilé central 10 en ayant son bord libre opposé au talon 8 situé à une certaine distance de la paroi arquée 10a définissant le fond de la cavité interne du profilé central 10 de manière à autoriser la libre déformation élastique du profilé 10 dans la direction du plan P pour absorber les différents efforts axiaux résultant de la différence de parallélisme entre le talon 8 et la surface à nettoyer S. La paroi 15 a pour rôle de constituer une butée de limitation de l'inclinaison du profilé central 10 relativement au talon 8 à la valeur angulaire α. Ainsi, lorsque la raclette d'essuyage 7 est déplacée alternativement dans le sens aller et retour de balayage de l'essuie-glace, les parois latérales 10b et 13a des profilés 10, 13 se déforment de telle manière que l'une des parois latérales 10b du profilé central 10 se rapproche de la paroi latérale associée 13a du profilé latéral 13 tandis que l'autre paroi latérale 10b du profilé central 10 s'écarte de la paroi latérale associée 13a de l'autre profilé latéral 13 pour venir en appui sur l'un des côtés de la paroi rigide 15 et maintenir la lèvre d'essuyage 9 à la position angulaire d'inclinaison α à laquelle l'arête d'extrémité 9a est en appui sur la surface à nettoyer S comme représenté aux figures 5B et 5C. Les épaisseurs des parois latérales 10b et 13a des profilés 10, 13 sont dans le cas présent pratiquement identiques et on constatera comme représenté à la figure 5B ou à la figure 5C que la partie arquée de liaison 14 des parois rapprochées 10b et 13a vient en appui dans la zone arquée définie entre le talon 8 et la paroi rigide 15.

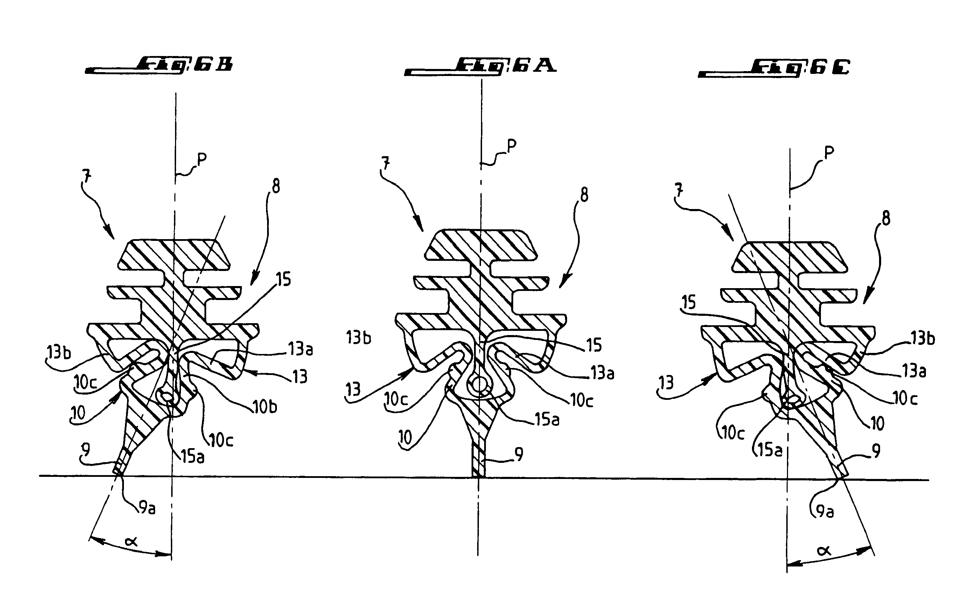

Selon la variante de réalisation représentée aux figures 6A à 6C, la paroi ou cloison rigide 15 comporte à sa partie inférieure opposée au talon 8 une partie cylindrique creuse 15a logée dans la cavité interne du profilé central 10 à proximité du fond de cette cavité délimitée par la paroi arquée de ce profilé. Lorsque la raclette d'essuyage est déplacée dans un sens ou dans l'autre de balayage alterné de l'essuie-glace, l'une des parois latérales 10b du profilé central 10 s'écarte élastiquement de la paroi latérale associée 13a du profilé latéral 13 pour venir en partie en appui sur le côté correspondant de la partie rigide de la paroi 15 et la partie arquée de la cavité interne du profilé central 10 vient en appui sur le côté correspondant de la partie cylindrique 15a de la paroi 15 pour la déformer sensiblement en direction du plan P comme représenté aux figures 6B et 6C. En outre, la partie inférieure de la cloison rigide 15 s'est légèrement cambrée dans le sens d'inclinaison du profilé central 10. Selon cette variante de réalisation, les parois latérales 10b du profilé central 10 comportent des nervures longitudinales 10c identiques à celles des figures 3A à 3C venant en appui sur leurs parois respectives de butée 13a et permettant de réduire le bruit lors du retournement de la lèvre d'essuyage 9.

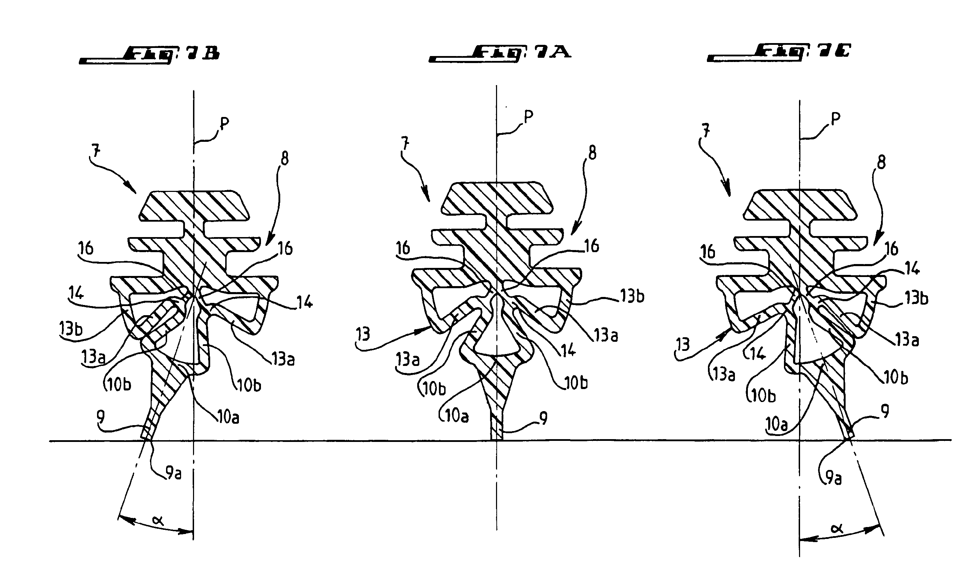

Selon le mode de réalisation représenté aux figures 7A à 7C, les deux parties de liaison arquées 14 des parois latérales 10b, 13a des profilés 10, 13 sont raccordées au talon par deux bandes longitudinales 16 en forme de V inversé qui sont symétriques au plan médian P en position de repos de la raclette 7 représentée en figure 7A. Les épaisseurs des parois latérales 10b et 13a des profilés 10, 13 sont pratiquement identiques. Les bandes 16 constituent en quelque sorte des vertèbres de liaison des parties arquées 14 au talon 8. Lorsque la raclette d'essuyage se déplace dans le sens du balayage alterné de l'essuie-glace, l'une des parois latérales 10b du profilé central 10 s'écarte de la paroi associée 13a du profilé latéral 13 tandis que l'autre paroi latérale 10b est en appui au moins partiellement sur la paroi latérale associée 13a de l'autre profilé latéral 13 et les bandes obliques de liaison 16 participent au maintien de la lèvre d'essuyage 9 à sa position angulaire déterminée α. On constatera que lors du retournement de la lèvre d'essuyage 9, la branche oblique de liaison 16 raccordée à la partie arquée de liaison des parois latérales en appui l'une sur l'autre 10b, 13a s'est légèrement écartée du plan médian longitudinal P de la raclette 7 comme représenté en figure 7B ou 7C.

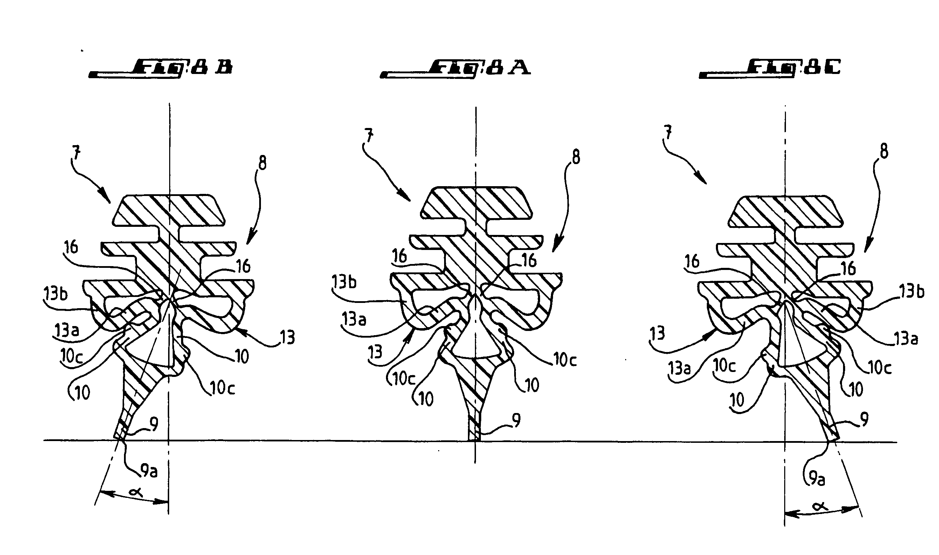

La raclette d'essuyage 7 représentée aux figures 8A à 8C ne diffère de celle des figures 7A à 7C que par la présence des deux nervures longitudinales 10c solidaires des faces externes respectivement des deux parois latérales 10b du profilé central 10 de manière à réduire davantage les bruits lors du retournement de la lèvre d'essuyage 9.

Dans tous les différents modes de réalisation ci-dessus décrits, la raclette d'essuyage est réalisée en une seule pièce par extrusion d'un matériau élastomère.

La raclette d'essuyage selon la présente invention permet de compenser les défauts de planéité de la surface vitrée par exemple d'un pare-brise de véhicule automobile par la déformation du matériau élastique constituant le profilé central de la raclette et, le cas échéant, la déformation du matériau élastique des profilés latéraux lorsqu'ils interviennent en tant qu'éléments de suspension de la lèvre d'essuyage 9. En outre, le bruit généré lors du retournement de la raclette lors du balayage alterné du balayage est supprimé et la lèvre d'essuyage est maintenue à un angle d'inclinaison déterminé pendant le balayage pour que l'arête inférieure de la lèvre soit en contact avec la surface vitrée et obtenir par conséquent une bonne qualité d'essuyage. On remarquera que vus de coupe, les profilés latéraux 13 et central 10 présentent l'apparence d'un trèfle à trois feuilles.

Bien entendu, le matériau élastique constituant la raclette d'essuyage sera choisi en dimension et épaisseur pour assurer efficacement les différentes fonctions susmentionnées.

## Revendications

1. Raclette d'essuyage pour balai d'essuie-glace notamment de véhicule automobile, comprenant un talon supérieur (8) pouvant être relié à la structure du balai d'essuie-glace (2) et renforcé par une vertèbre longitudinale de rigidification et une lèvre inférieure d'essuyage (9) reliée au talon (8) par au moins un moyen de suspension (10,13) conférant une souplesse à la lèvre inférieure (9), **caractérisée en ce que** le moyen de suspension comprend un profilé central creux (10) à section transversale sensiblement en forme de secteur élastiquement déformable en direction perpendiculaire au talon (8), la lèvre (9) est reliée au profilé central (10) par l'intermédiaire d'un pied (11) solidaire de la paroi arquée (10a) du profilé (10) qui est relié au talon (8) de manière articulée pour permettre au pied (11) et à la lèvre d'essuyage (9) de s'incliner élastiquement d'un angle limité déterminé (α) de part et d'autre du plan médian longitudinal (P) de la raclette (7) selon le sens de déplacement du balai d'essuie-glace (2).

2. Raclette d'essuyage selon la revendication 1, **caractérisée en ce que** le profilé central de suspension (10) est relié au talon (8) par une charnière longitudinale d'articulation (12) et **en ce que** le talon (8) comprend deux profilés latéraux (13) à section transversale sensiblement en forme de demi-secteur disposés de part et d'autre du profilé central (10) symétriquement au plan médian longitudinal (P) de la raclette (7) et dont les parois latérales inclinées (13a) situées en regard respectivement des parois latérales (10b) du profilé central (10) constituent des butées de limitation de l'inclinaison du pied (11) et de la lèvre d'essuyage (9).

3. Raclette d'essuyage selon la revendication 2, **caractérisée en ce que** la face de chaque paroi latérale (10) du profilé central (10) comprend une nervure longitudinale (10c) à section sensiblement demi-circulaire située en regard d'une paroi correspondante (13a) d'un profilé latéral (13) et venant en appui sur cette paroi (13a) du profilé latéral (13) pour définir la position inclinée déterminée du pied (11) et de la lèvre d'essuyage (9).

4. Raclette d'essuyage selon la revendication1, **caractérisée en ce que** le talon (8) comprend deux profilés latéraux (13) à section transversale sensiblement en forme de demi-secteur disposés de part et d'autre du profilé central (10) symétriquement au plan médian longitudinal (P) de la raclette (7) et ayant chacun une paroi latérale inclinée (13a) située en regard d'une paroi latérale correspondante (10b) du profilé central (10), et **en ce que** chaque paroi latérale (10b) du profilé central (10) est raccordée à la paroi inclinée (13a) de plus grande épaisseur du profilé latéral (13) par une partie de liaison arquée (14) pour permettre l'inclinaison déterminée du pied (11) et de la lèvre d'essuyage (9) par déformation élastique contrôlée relativement au talon (8) des parois (10b,13a) raccordées entre elles des profilés latéraux (13) et central (10).

5. Raclette d'essuyage selon la revendication 4, **caractérisée en ce que** le talon (8) comprend une paroi rigide longitudinale (15) située dans le plan médian longitudinal (P) de la raclette (7) en s'étendant dans le profilé central (10) et constituant une butée du pied (11) et de la lèvre d'essuyage (9) à l'une ou l'autre de leur position inclinée déterminée.

6. Raclette d'essuyage selon la revendication 5, **caractérisée en ce que** la paroi rigide (15) s'étend dans le profilé central (10) à une certaine distance de la paroi de fond arquée (10c) de ce profilé pour permettre à ce dernier de se déformer perpendiculairement au talon (8).

7. Raclette d'essuyage selon la revendication 5, **caractérisée en ce que** la paroi rigide (15) s'étend en partie dans le profilé central (10) et a sa partie d'extrémité libre relativement souple logée dans le profilé (10) se terminant par une partie cylindrique creuse (15a) à proximité de la paroi de fond arquée (10c) du profilé (10)et pouvant se déformer notamment perpendiculairement au talon (8).

8. Raclette d'essuyage selon l'une des revendications 4 à 7, **caractérisée en ce que** les deux parties de liaison arquées (14) des parois (10b,13a) des profilés latéraux (13) et central (10) sont raccordées au talon (8) par deux bandes longitudinales en V inversé (16) symétriques au plan médian longitudinal (P) de la raclette (7) en position de repos de cette dernière.

9. Raclette d'essuyage selon l'une des revendications 4 à 8, **caractérisée en ce que** la face de chaque paroi latérale (10b) du profilé central (10) comprend une nervure longitudinale (10c) à section sensiblement demi-circulaire située en regard d'une paroi correspondante (13a) d'un profilé latéral (13).

10. Raclette d'essuyage selon l'une des revendications précédentes, **caractérisée en ce que** l'inclinaison du pied (11) et de la lèvre d'essuyage (9) de chaque côté du plan médian longitudinal (P) de la raclette (7) est d'environ 15° à environ 20° d'angle.

11. Raclette d'essuyage selon l'une des revendications précédentes, **caractérisée en ce qu'**elle est réalisée par extrusion en matériau élastomère ou par moulage.

## Claims

1. A wiper blade for a windscreen wiper notably for a motor vehicle, comprising an upper heel (8) which may be connected to the structure of the windscreen wiper (2) and reinforced by a longitudinal stiffening vertebra and a lower wiping lip (9) connected to the heel (8) by at least one suspension means (10, 13) providing flexibility to the lower lip (9), **characterized in that** the suspension means comprises a hollow central profile (10) with a cross-section substantially as an elastically deformable sector in the direction perpendicular to the heel (8), the lip (9) is connected to the central profile (10) via a leg (11) firmly attached to the arched wall (10a) of the profile (10) which is connected to the heel (8) in a jointed way in order to allow the leg (11) and the wiping lip (9) to elastically tilt by a determined limited angle (α) on either side of the longitudinal median plane (P) of the blade (7) according to the direction of displacement of the windscreen wiper (2).

2. The wiper blade according to claim 1, **characterized in that** the central suspension profile (10) is connected to the heel (8) by a longitudinal joint hinge (12) and **in that** the heel (8) comprises two side profiles (13) with a cross-section substantially as a half-sector positioned on either side of the central profile (10) symmetrically to the longitudinal median plane (P) of the blade (7) and the tilted side walls of which (13a) respectively located facing the side walls (10b) of the central profile (10) form stops for limiting the tilt of the leg (11) and of the wiping lip (9).

3. The wiper blade according to claim 2, **characterized in that** the face of each side wall (10) of the central profile (10) comprises a longitudinal rib (10c) with a substantially semi-circular section located facing a corresponding wall (13a) of a side profile (13) and pressing on this side (13a) of the side profile (13) in order to define the determined tilted position of the leg (11) and of the wiping lip (9).

4. The wiper blade according to claim 1, **characterized in that** the heel (8) comprises two side profiles (13) with a cross-section substantially as a half-sector positioned on either side of the central profile (10) symmetrically to the longitudinal median plane (P) of the blade (7) and each having a tilted side wall (13a) located facing a corresponding side wall (10b) of the central profile (10), and **in that** each side wall (10b) of the central profile (10) is connected to the tilted wall (13a) of larger thickness of the side profile (13) through an arched connecting portion (14) in order to provide the determined tilt of the leg (11) and of the wiping lip (9) by controlled elastic deformation relatively to the heel (8) of the walls (10b, 13a) connected together of the side (13) and central(10) profiles.

5. The wiper blade according to claim 4, **characterized in that** the heel (8) comprises a longitudinal stiff wall (15) located in the longitudinal median plane (P) of the blade (7), extending into the central profile (10) and forming a stop for the leg (11) and the wiping lip (9) at either one of their determined tilted positions.

6. The wiper blade according to claim 5, **characterized in that** the rigid wall (15) extends into the central profile (10) at a certain distance from the arched bottom wall (10c) of this profile in order to allow the latter to deform perpendicularly to the heel (8).

7. The wiper blade according to claim 5, **characterized in that** the rigid wall (15) partly extends into the central profile (10) and has its relatively flexible free end portion housed in the profile (10) ending with a hollow cylindrical portion (15a) in proximity to the arched bottom wall (10c) of the profile (10) and which may notably deform perpendicularly to the heel (8).

8. The wiper blade according to any of claims 4 to 7, **characterized in that** both arched connecting portions (14) of the walls (10b, 13a) of the side (13) and central (10) profiles are connected to the heel (8) through two longitudinal strips as an inverted V (16) symmetrical to the longitudinal median plane (P) of the blade (7) in the rest position of the latter.

9. The wiper blade according to any of claims 4 to 8, **characterized in that** the face of each side wall (10b) of the central profile (10) comprises a longitudinal rib (10c) with a substantially semi-circular section located facing a corresponding wall (13a) of a side profile (13).

10. The wiper blade according to any of the preceding claims, **characterized in that** the tilt of the leg (11) and of the wiping lip (9) of each side of the longitudinal median plane (P) of the blade (7) forms an angle from about 15° to about 20°.

11. The wiper blade according to any of the preceding claims, **characterized in that** it is made by extrusion in an elastomeric material or by molding.

## Patentansprüche

1. Wischblatt für Scheibenwischer, vor allem eines Kraftfahrzeugs, einen oberen Absatz (8) umfassend, der mit der Struktur des Scheibenwischers (2) verbindbar und von einer länglichen Versteifungsrippe verstärkt wird, und eine untere Wischlippe (9), die mit dem Absatz (8) durch mindestens ein Abfederungsmittel (10, 13) verbunden ist, das der unteren Lippe (9) eine Geschmeidigkeit verleiht, **dadurch gekennzeichnet, dass** das Abfederungsmittel ein hohles Mittenprofil (10) mit einem transversalen Querschnitt etwa in Sektorform umfasst, der in senkrechter Richtung zum Absatz (8) elastisch verformbar ist, die Lippe (9) mit dem Mittenprofil (10) über einen Fuß (11) verbunden ist, der mit der gekrümmten Wand (10a) des Profils (10) verbunden ist, das mit dem Absatz (8) gelenkig verbunden ist, um dem Fuß (11) und der Wischlippe (9) zu erlauben, sich elastisch in einem bestimmten begrenzten Winkel (α) auf der einen und der anderen Seite der mittleren Längsebene (P) des Wischblatts in Richtung der Verschiebung des Scheibenwischers (2) zu neigen.

2. Wischblatt nach Anspruch 1, **dadurch gekennzeichnet, dass** das Abfederungs-Mittenprofil (10) mit dem Absatz (8) durch ein Längs-Gelenkscharnier (12) verbunden ist und **dadurch**, dass der Absatz (8) zwei Seitenprofile (13) mit transversalem Querschnitt etwa in Halbsektorform umfasst, die auf der einen und der anderen Seite des Mittenprofils (10) symmetrisch zur mittleren Längsebene (P) des Blatts (7) angeordnet sind und deren geneigte Seitenwände (13a), die sich jeweils den Seitenwänden (10a) des Mittenprofils (10) gegenüber befinden, Anschläge zur Begrenzung der Neigung des Fußes (11) und der Wischlippe (9) darstellen.

3. Wischblatt nach Anspruch 2, **dadurch gekennzeichnet, dass** die Fläche jeder Seitenwand (10b) des Mittenprofils (10) eine Längsrippe (10c) mit etwa halbkreisförmigem Querschnitt gegenüber einer entsprechenden Wand (13a) eines Seitenprofils (13) umfasst und sich auf diese Wand (13a) des Seitenprofils (13) abstützt, um die bestimmte geneigte Stellung des Fußes (11) und der Wischlippe (9) zu definieren.

4. Wischblatt nach Anspruch 1, **dadurch gekennzeichnet, dass** der Absatz (8) zwei Seitenprofile (13) mit transversalem Querschnitt etwa in Halbsektorform umfasst, die auf der einen und der anderen Seite des Mittenprofils (10) symmetrisch zur mittleren Längsebene (P) des Blatts (7) angeordnet sind und jeweils eine geneigte Seitenwand (13a) haben, die sich gegenüber einer entsprechenden Seitenwand (10a) des Mittenprofils (10) befindet, und **dadurch**, dass jede Seitenwand (10b) des Mittenprofils (10) mit der geneigten Wand (13a) größerer Dicke des Seitenprofils (13) durch einen gekrümmten Verbindungsabschnitt (14) verbunden ist, um die bestimmte Neigung des Fußes (11) und der Wischlippe (9) durch kontrollierte elastische Verformung der miteinander verbundenen Wände (10b, 13a) der Seiten- (13) und Mittelprofile (10) relativ zum Absatz (8) zu erlauben.

5. Wischblatt nach Anspruch 4, **dadurch gekennzeichnet, dass** der Absatz (8) eine starre Längswand (15) umfasst, die sich in der mittleren Längsebene (P) des Blatts (7) befindet und sich in das Mittenprofil erstreckt und einen Anschlag des Fußes (11) und der Wischlippe (9) in der einen oder der anderen ihrer bestimmten geneigten Stellungen darstellt.

6. Wischblatt nach Anspruch 5, **dadurch gekennzeichnet, dass** sich die starre Wand (15) im Mittenprofil (10) in einem bestimmten Abstand von der gekrümmten Rückwand (10c) dieses Profils erstreckt, um diesem zu ermöglichen, sich senkrecht zum Absatz (8) zu verformen.

7. Wischblatt nach Anspruch 5, **dadurch gekennzeichnet, dass** sich die starre Wand (15) teilweise im Mittenprofil (10) erstreckt und sein freier relativ elastischer Endabschnitt, der in einem hohlen zylindrischen Abschnitt (15a) in der Nähe der gekrümmten Rückwand (10c) endet und vor allem senkrecht zum Absatz (8) verformbar ist, im Profil (10) untergebracht ist.

8. Wischblatt nach einem der Ansprüche 4 bis 7, **dadurch gekennzeichnet, dass** die zwei gekrümmten Verbindungsabschnitte (14) der Wände (10b, 13a) der Seiten-(13) und Mittenprofile (10) mit dem Absatz (8) durch zwei Längsstreifen als umgekehrtes V (16) symmetrisch zur mittleren Längsebene (P) des Blatts (7) in Ruhestellung desselben verbunden sind.

9. Wischblatt nach einem der Ansprüche 4 bis 8, **dadurch gekennzeichnet, dass** die Fläche jeder Seitenwand (10b) des Mittenprofils (10) eine Längsrippe (10c) mit einem etwa halbkreisförmigen Querschnitt umfasst, die sich gegenüber einer entsprechenden Wand (13a) eines Seitenprofils (13) befindet.

10. Wischblatt nach einem der vorangehenden Ansprüche, **dadurch gekennzeichnet, dass** die Neigung des Fußes (11) und der Wischlippe (9) an jeder Seite der mittleren Längsebene (P) des Blatts (7) von 15° bis zirka 20° im Winkel beträgt.

11. Wischblatt nach einem der vorangehenden Ansprüche, **dadurch gekennzeichnet, dass** es durch Extrudieren aus einem Elastomerwerkstoff oder durch Formen hergestellt ist.
